# EUROPÄISCHE PATENTSCHRIFT

(11) **EP 2 181 775 B1**
(45) Veröffentlichungstag und Bekanntmachung des Hinweises auf die Patenterteilung: **12.09.2012**
(21) Anmeldenummer: 08019281.8
(22) Anmeldetag: 04.11.2008
(51) Int. Cl.: B05B 15/04, F01D 25/28

(54) **Halterung für grosse Bauteile mit verbesserten Spritzschutz**
Holder for large components with improved spray protection
Fixation pour grands composants ayant une protection contre la projection

(43) Veröffentlichungstag der Anmeldung: 05.05.2010
(73) Patentinhaber: Siemens Aktiengesellschaft, 80333 München (DE)
(72) Erfinder: Kyeck, Sascha Martin, 81497 Berlin (DE); Ladru, Francis-Jurjen, 13587 Berlin (DE)
(74) Vertreter: Kaiser, Axel

(56) Entgegenhaltungen:
- EP-A- 1 762 303
- EP-A- 1 808 269
- EP-A- 1 820 872
- DE-A1-102005 024 697
- US-A- 5 849 359
- US-A1- 2004 062 864

## Beschreibung

Die Erfindung betrifft eine Verwendung einer Halterung für Turbinenschaufeln mit verbessertem Spritzschutz.

Beim thermischen Spritzen müssen Bereiche, die nicht beschichtet werden sollen, durch konstruktive Maßnahmen und Prozessführung vor dem sogenannten "Overspray" geschützt werden. Aktuell werden für den Schutz von nicht zu beschichtenden Flächen Vorrichtungen verwendet, die die zu schützenden Bereiche mittels Schutzbleche (sog. Wechselbleche im direkten Kontakt Vorrichtung - Bauteil) abdecken. Bei großen Komponenten sind diese Schutzbleche so lang, dass die prozessbedingte Temperaturerhöhung der Vorrichtung zu einer Verspannung und damit einem "Wegklappen" führt. Diese Bewegung gibt einen Spalt zwischen Bauteil und Vorrichtung frei, in den dann Spritzgut eindringt und sich niederschlägt. Des Weiteren unterliegen die Schutzbleche einem Verschleißen, der dazu führt, dass dieser thermisch bedingte Spalt sich mit der Zeit vergrößert. Gegenmaßnahmen konstruktiver Art am Schutzblech scheiterten aufgrund der Restriktionen bezüglich Zugänglichkeit des Bauteils für den Beschichtungsroboter.

Zurzeit existiert kein zufriedenstellender Lösungsansatz, so dass bisher die betroffenen Bauteile nachgearbeitet werden mussten.

Es ist Aufgabe der Erfindung o. g. Problem zu lösen.

Die Aufgabe wird gelöst durch eine Verwendung einer Halterung nach Anspruch 1.

In den Unteransprüchen sind weitere vorteilhafte Maßnahmen aufgelistet, die beliebig miteinander kombiniert werden können, um weitere Vorteile zu erzielen.

Da eine Versteifung der bisherigen Konstruktion nicht möglich ist, wurde ein Einsteckblech (Stab, Stange, Blech) kon das im Verhakungsbereich also in der Nut vom Dichtblech der Schaufel eingesteckt wird und so den nicht zu beschichtenden Bereich der Schaufeln effizient vor Overspray schützt. Sich auf dem Blech niederschlagender Overspray kann mit einem einfachen Werkzeug wie z.B. Schraubendreher, Dreikantschaber etc nach dem Beschichtungsvorgang entfernt werden.

Aufwändige Nacharbeit an den bisher betroffenen Stellen fällt gänzlich weg (Entfernung Overspray) und die eigentliche Konstruktion der Vorrichtung bleibt unberührt, da das Einsteckblech eine zusätzliche Maßnahme ist. Hervorzuheben ist an dieser Stelle, dass durch diese Lösung auch Bereiche erstmalig erfolgreich zu 100% vor Overspray geschützt werden können, an denen keinerlei Nacharbeiten erlaubt sind.

Es zeigen:
- Figur 1, 2, 3, 4: verschiedene Ansichten einer Vorrichtung oder Teile dieser Vorrichtung,
- Figur 5: eine Gasturbine und
- Figur 6: eine Turbinenschaufel.

Die Beschreibung und die Figuren stellen nur Ausführungsbeispiele der Erfindung dar.

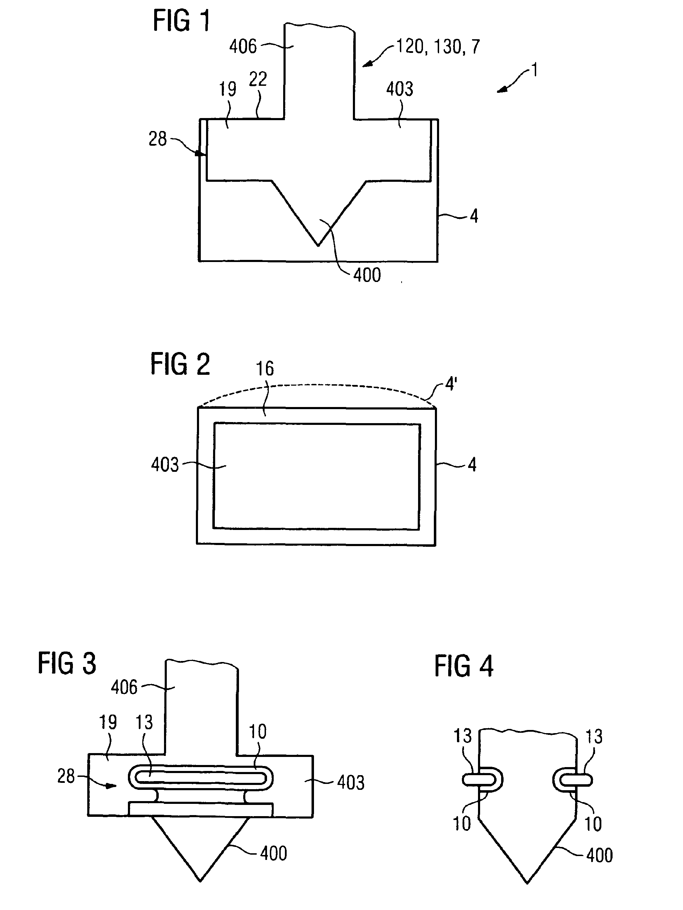

Figur 1 zeigt eine Halterung 4 für große Bauteile 7, 120, 130. Die Erfindung wird nur beispielhaft anhand von Turbinenschaufeln 120, 130 erläutert. Eine solche Halterung 4 ist vorzugsweise in der EP 1 808 269 A1 beschrieben. In einer solchen Halterung 4 ist eine Turbinenschaufel 120, 130 oder generell ein Bauteil 7 angeordnet. Gewisse Bereiche des Bauteils 7 sollen nicht beschichtet werden, so dass sie durch die Halterung 4 gleichzeitig mit abgeschattet werden. Von der Turbinenschaufel 120, 130 sollen hier als Beispiel die Seitenflächen der Schaufelplattformen 403 nicht beschichtet werden, sondern lediglich die Oberseite 22 der Schaufelplattform 403 und das Schaufelblatt 406. Bei besonders großen Bauteilen kommt es zur Verbiegung 4' (Fig. 2) des Spalts 16 zwischen der Schaufelplattform 403 und der Halterung 4, so das Beschichtungsmaterial in unerwünschte Bereiche eindringt. Dies ist in Figur 2 für eine Seite der Halterung 4 mit der gestrichelten Linie 4' angedeutet.

Daher ist als ein Teil der Vorrichtung 1 ein Stab 13, Stange oder Blech in eine Vertiefung 10 der Seitenfläche 19 der Schaufelblattform 403 eingefügt (Fig. 4). Ggf. muss die Turbinenschaufel 120, 130 so umkonstruiert werden, dass eine solche Vertiefung 10 oder Nut 10 vorhanden ist. Der Stab 13 ragt vorzugsweise über die Vertiefung 10 hinaus. Ebenso vorzugsweise kommt der Stab 13 bei Raumtemperatur der Innenseite der Halterung 4 (Gehäuse) sehr nahe oder liegt an ihr 4 an.

Der Stab 13 erstreckt sich vorzugsweise in dieser Vertiefung 10 über die gesamte Länge der Vertiefung (Nut) 10 (Fig. 3). Somit wird ein wirksamer Schutz des Bauteils 7, 120, 130 innerhalb der Halterung 4 erreicht. Die Vertiefung 10 ist vorzugsweise so lang wie möglich.

Figur 2 zeigt die Draufsicht auf die Halterung 4, die Schaufelplattform 403 und den Spalt 16 zwischen Halterung 4 und Schaufelplattform 403.
Die Halterung 4 ist vorzugsweise rechteckförmig ausgebildet. Die Stäbe 13 sind vorzugsweise nur an den längsten Seiten vorhanden. Sie können auch an allen vier Seiten vorhanden sein.

Der Stab 13 ist vorzugsweise dicker ausgebildet als die Wand des Gehäuses 4 im Bereich 28 der Vertiefung 10. So wird eine gute mechanische Stabilität gewährleistet.

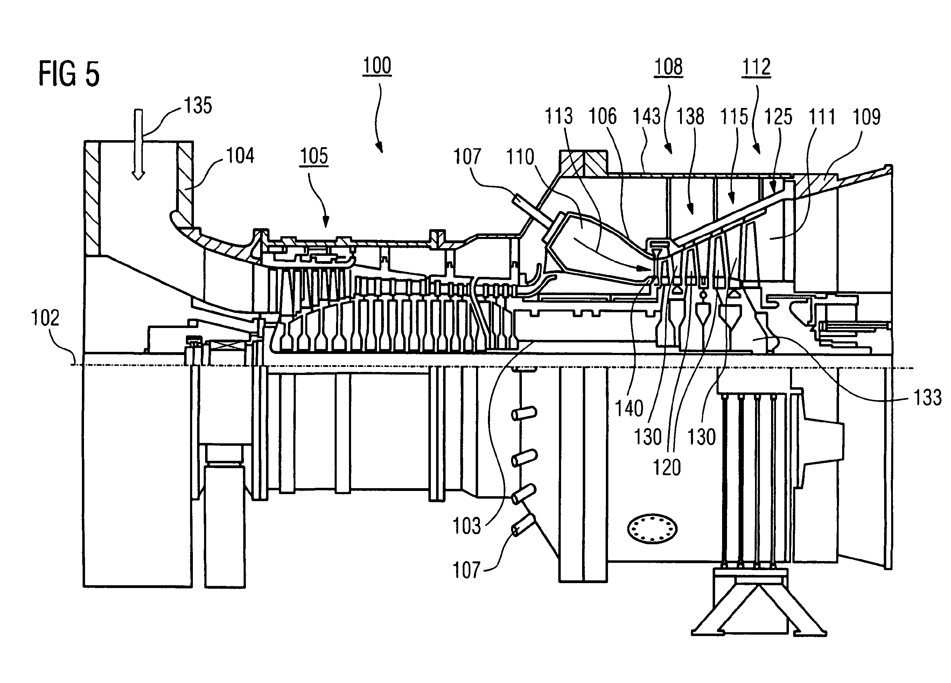

Die Figur 5 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108. Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

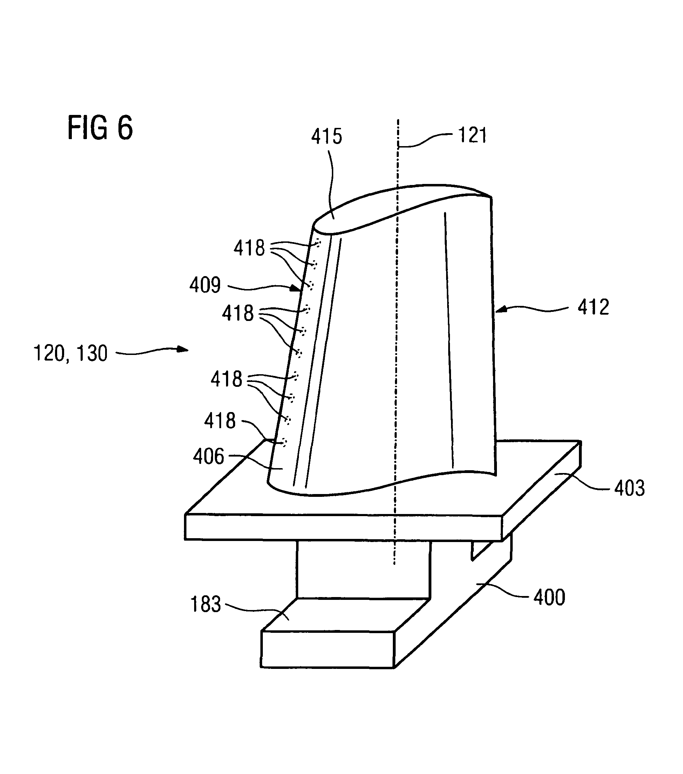

Die Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich. Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte. Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verwendung einer Halterung (1) für ein Bauteil (120, 130),
wobei die Halterung ein Gehäuse (4) aufweist,
in dem (4) ein Teil des Bauteils (120, 130),
insbesondere eine Schaufelblattform (403) und ein Schaufelfuß (400) für eine Turbinenschaufel (120, 130) angeordnet sind,
wobei ein Stab (13) in einer Vertiefung (10) an einer Seitenfläche (19) des Bauteils (120, 130),
lose eingelegt ist,
der (13) innerhalb der Halterung (4) angeordnet ist und.
bei dem der Stab (13) dicker ausgebildet ist als die Wand des Gehäuses (4) im Bereich der Vertiefung (10).

2. Verwendung einer Halterung nach Anspruch 1,
bei dem der Stab (13) an einer Innenfläche (22) der Halterung (4) anliegt.

3. Verwendung einer Halterung nach Anspruch 1 oder 2,
bei dem der Stab (13) mindestens 75% der Länge des Bauteils (120, 130) beträgt.

4. Verwendung einer Halterung nach Anspruch 1, 2 oder 3, bei dem der Stab (13) aus der Vertiefung (10) herausragt.

## Claims

1. Use of a holder (1) for a component (120, 130),
wherein the holder has a housing (4),
part of the component (120, 130),
in particular a blade or vane platform (403) and a blade or vane root (400) for a turbine blade or vane (120, 130), being arranged in said housing (4),
wherein a rod (13) is inserted loosely in a recess (10) on a side face (19) of the component (120, 130),
said rod (13) being arranged within the holder (4), and
in which the rod (13) is thicker than the wall of the housing (4) in the region of the recess (10).

2. Use of a holder according to Claim 1,
in which the rod (13) rests on an inner face (22) of the holder (4).

3. Use of a holder according to Claim 1 or 2,
in which the rod (13) amounts to at least 75% of the length of the component (120, 130).

4. Use of a holder according to Claim 1, 2 or 3,
in which the rod (13) projects out of the recess (10).

## Revendications

1. Utilisation d'une fixation ( 1 ) pour un composant ( 120, 130 ),
la fixation comportant une boîte ( 4 ),
dans laquelle ( 4 ) une partie du composant ( 120, 130 ), notamment une forme ( 403 ) de lame d'aube et/ou une emplanture ( 400 ) d'aube pour une aube ( 120, 130 ) de turbine sont disposées,
une barre ( 13 ) étant insérée dans une cavité ( 10 ) sur une surface ( 19 ) latérale du composant ( 120, 130 ),
barre ( 13 ) qui est disposée dans la fixation ( 4 )
et
dans laquelle la barre ( 13 ) est plus épaisse que la paroi de la boîte ( 4 ) dans la zone de la cavité ( 10 ).

2. Utilisation d'une fixation suivant la revendication 1, dans laquelle la barre ( 3 ) s'applique à une surface ( 22 ) intérieure de la fixation ( 4 ).

3. Utilisation d'une fixation suivant la revendication 1 ou 2,
dans laquelle la barre ( 13 ) représente au moins 75% de la longueur du composant ( 120, 130 ).

4. Utilisation d'une fixation suivant la revendication 1, 2 ou 3,
dans laquelle la barre ( 13 ) dépasse de la cavité 10.
